# EUROPÄISCHE PATENTSCHRIFT

(11) **EP 3 298 255 B1**
(45) Veröffentlichungstag und Bekanntmachung des Hinweises auf die Patenterteilung: **05.09.2018**
(21) Anmeldenummer: 16723705.6
(22) Anmeldetag: 11.05.2016
(51) Int. Cl.: F01P 3/20, F01P 7/16, F16K 11/085

(54) **BRENNKRAFTMASCHINE UND KRAFTFAHRZEUG**
INTERNAL COMBUSTION ENGINE AND MOTOR VEHICLE
MOTEUR À COMBUSTION INTERNE ET VÉHICULE À MOTEUR

(30) Priorität: 20.05.2015 DE 102015107926
(43) Veröffentlichungstag der Anmeldung: 28.03.2018
(73) Patentinhaber: Volkswagen Aktiengesellschaft, 38440 Wolfsburg (DE)
(72) Erfinder: KLOFT, Manfred, 38154 Königslutter (DE); JAECKEL, Tobias, 38124 Braunschweig (DE); LÜDERS, Ralf, 31224 Peine (DE)
(74) Vertreter: Bungartz, Florian
(86) Internationale Anmeldenummer: PCT/EP2016/060501
(87) Internationale Veröffentlichungsnummer: WO 2016/184737

(56) Entgegenhaltungen:
- EP-A1- 1 197 644
- DE-A1- 19 849 492
- FR-A1- 2 800 125
- FR-A1- 2 850 726

## Beschreibung

Die Erfindung betrifft eine Brennkraftmaschine und ein Kraftfahrzeug mit einer solchen Brennkraftmaschine.

Brennkraftmaschinen für Kraftfahrzeuge weisen in der Regel ein Kühlsystem auf, in dem ein Kühlmittel mittels einer oder mehrerer Pumpen in mindestens einem Kühlkreis gepumpt wird und dabei Wärmeenergie von in den Kühlkreis integrierten Komponenten, insbesondere einem Verbrennungsmotor sowie einem Ölkühler und/oder einem Ladeluftkühler, aufnimmt. Diese Wärmeenergie wird anschließend in einem Umgebungswärmetauscher, dem sogenannten Haupt(wasser)kühler, sowie zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Kühlsysteme moderner Kraftfahrzeuge weisen vielfach mehrere Kühlkreise auf. Beispielsweise ist es bekannt, einen so genannten großen beziehungsweise Hauptkühlkreis sowie einen kleinen Kühlkreis vorzusehen, die abschnittsweise integral ausgebildet sind, und wobei mittels eines thermostatgesteuerten Ventils das Kühlmittel entweder über den großen oder den kleinen Kühlkreis geführt wird. Dies erfolgt in Abhängigkeit von der Temperatur des Kühlmittels, so dass beispielsweise in einer Warmlaufphase der Brennkraftmaschine, wenn das Kühlmittel einen vorgesehenen Betriebstemperaturbereich noch nicht erreicht hat, dieses in dem kleinen Kühlkreis gefördert wird, wodurch der Hauptkühler, d.h. derjenige Umgebungswärmetauscher, in dem das Kühlmittel durch Wärmeübergang auf die Umgebungsluft hauptsächlich gekühlt wird, umgangen wird. Hat das Kühlmittel dagegen den Betriebstemperaturbereich erreicht, wird mittels des thermostatgesteuerten Ventils das Kühlmittel in dem großen Kühlkreis gefördert, so dass durch einen Wärmeübergang von dem Kühlmittel auf die Umgebungsluft ein Überhitzten des Kühlsystems vermieden wird. Der Heizungswärmetauscher als zweiter Umgebungswärmetauscher ist dagegen regelmäßig in den kleinen Kühlkreis integriert, wodurch auch schon in der Warmlaufphase der Brennkraftmaschine eine Beheizung des Innenraums des Kraftfahrzeugs ermöglicht wird.

Bei konventionell angetriebenen Kraftfahrzeugen, bei denen die Fahrantriebsleistung ausschließlich mittels einer Brennkraftmaschine erzeugt wird, kommen in der Regel so genannte mechanisch angetriebene Kühlmittelpumpen zum Einsatz, die von dem Verbrennungsmotor selbst angetrieben werden. Derartige mechanisch angetriebene Kühlmittelpumpen können eine einfache konstruktive Ausgestaltung aufweisen und sind daher kostengünstig herstellbar. Als nachteilig bei mechanisch angetriebenen Kühlmittelpumpen kann sich jedoch die Abhängigkeit der Antriebsdrehzahl der Kühlmittelpumpen von den Drehzahlen der Abtriebswellen (z.B. Kurbel- oder Nockenwellen) der dazugehörigen Verbrennungsmotoren zeigen. Bereits bei konventionell angetriebenen Kraftfahrzeugen kann sich diese Abhängigkeit dahingehend negativ auswirken, dass eine Auslegung einer Kühlmittelpumpe hinsichtlich einer ausreichenden Förderleistung bei relativ niedrigen Drehzahlen zu einer Überdimensionierung der Förderleistung bei hohen Drehzahlen der Abtriebswelle des Verbrennungsmotors führen könnte. Eine solche Problematik kann jedoch durch eine regelbare Ausgestaltung einer mechanisch angetriebenen Kühlmittelpumpe vermieden oder zumindest abgeschwächt werden. Eine solche regelbare mechanisch angetriebene Kühlmittelpumpe ist beispielsweise aus der DE 10 2010 044 167 A1 bekannt.

Bei den Kühlsystemen moderner Kraftfahrzeuge kann die Hauptregelung des Volumenstroms des Kühlmittels somit mittels regelbarer Kühlmittelpumpen erfolgen, während die Verteilung des Volumenstroms auf die einzelnen, jeweils einen unterschiedlichen Kühlbedarf aufweisenden Komponenten mittels aktiv und insbesondere über Thermostate angesteuerte Ventile gesteuert werden kann. Beispielsweise offenbart die DE 103 42 935 A1 eine Brennkraftmaschine mit einem Kühlkreis, der eine von einem Verbrennungsmotor mechanisch angetriebene Pumpe umfasst. Der Fördervolumenstrom der Pumpe ist somit von der Drehzahl des Verbrennungsmotors abhängig. Um für mehrere in den Kühlkreis integrierte Wärmetauscher, wie insbesondere Kühlkanäle eines Zylinderkurbelgehäuses und eines Zylinderkopfs des Verbrennungsmotors sowie einen Heizungswärmetauscher für eine Innenraumheizung eines von der Brennkraftmaschine angetriebenen Kraftfahrzeugs, individuell angepasste Volumenströme des Kühlmittels zu erreichen, sind eine Mehrzahl von jeweils individuell ansteuerbaren Regelventilen in den Kühlkreislauf integriert. Das aus der DE 103 42 935 A1 bekannte Kühlsystem ist daher konstruktiv aufwändig.

Eine Brennkraftmaschine gemäß dem Oberbegriff des Patentanspruchs 1 ist in der bislang unveröffentlichten deutschen Patentanmeldung 10 2014 219 252.8 beschrieben. Diese Brennkraftmaschine umfasst eine Regelvorrichtung, die mittels eines einen ersten Sperrschieber bewegenden Aktors und eines zweiten, phasenweise von dem ersten Sperrschieber mitbewegten zweiten Sperrschiebers auf vergleichsweise einfache Weise die Realisierung einer betriebsabhängig angepassten Kühlmittelzufuhr zu den verschiedenen Komponenten eines Kühlsystems der Brennkraftmaschine ermöglicht. Dabei kommt eine mechanisch, d.h. von einer Welle eines Verbrennungsmotors der Brennkraftmaschine angetriebene Kühlmittelpumpe zum Einsatz. Eine ähnliche Brennkraftmaschine wird in FR 2 850 726 offenbart. Bei Hybridfahrzeugen, d.h. Kraftfahrzeugen mit hybridem Fahrantrieb, bei denen die Fahrantriebsleistung zumindest temporär von sowohl einer Brennkraftmaschine (direkt oder indirekt) als auch von einem Elektromotor erzeugt wird, ist der Verbrennungsmotor der Brennkraftmaschine häufig und auch für einen längeren Zeitraum abgeschaltet, obwohl das Kraftfahrzeug in Betrieb genommen und insbesondere auch durch den elektrischen Fahrantrieb bewegt wird. Um auch in einem solchen Betriebszustand eines Hybridfahrzeugs die Funktionalität des Kühlsystems (teilweise) aufrechtzuerhalten, beispielsweise um eine Kühlung einzelner Komponenten des Antriebsstrangs und/oder eine Temperierung eines Innenraums des Kraftfahrzeugs zu ermöglichen, werden bei Hybridfahrzeugen vielfach elektrisch angetriebene Kühlmittelpumpen eingesetzt, deren Antrieb ausschließlich durch einen hierfür vorgesehenen Elektromotor erfolgt. Die hierfür am Markt erhältlichen Elektromotor-Kühlmittelpumpe-Einheiten sind relativ teuer.

In der DE 20 2008 005 103 U1 ist weiterhin die Möglichkeit offenbart, Nebenaggregate eines Verbrennungsmotors und unter anderem eine Kühlwasserpumpe über einen Keilriementrieb von einem Elektromotor antreiben zu lassen.

Ausgehend von diesem Stand der Technik lag der Erfindung die Aufgabe zugrunde, bei einer Brennkraftmaschine mit einem Kühlsystem, das mehrere Komponenten umfasst, auf möglichst einfache und kostengünstige Weise eine Anpassung der Kühlmittelströmung durch die einzelnen Komponenten zu ermöglichen. Dabei sollte insbesondere in einem Nichtbetrieb des Verbrennungsmotors der Brennkraftmaschine die Förderung von Kühlmittel, insbesondere zu einem Heizungswärmetauscher des Kühlsystems, möglich sein.

Diese Aufgabe wird durch eine Brennkraftmaschine gemäß dem Patentanspruch 1 gelöst. Ein Kraftfahrzeug mit einer solchen Brennkraftmaschine ist Gegenstand des Patentanspruchs 13. Vorteilhafte Ausführungsformen der erfindungsgemäßen Brennkraftmaschine und des erfindungsgemäßen Kraftfahrzeugs sind Gegenstände der weiteren Patentansprüche und ergeben sich aus der nachfolgenden Beschreibung der Erfindung. Gegenstand des Patentanspruchs 15 ist zudem ein Verfahren zum Betreiben eines erfindungsgemäßen Kraftfahrzeugs.

Die Erfindung betrifft zum Einen eine Brennkraftmaschine, die zumindest einen Verbrennungsmotor und ein Kühlsystem aufweist, wobei das Kühlsystem zumindest eine Kühlmittelpumpe, einen Hauptkühler, einen Heizungswärmetauscher, einen den Heizungswärmetauscher umgehenden Bypass, Kühlmittelkanäle in dem Verbrennungsmotor sowie eine Regelvorrichtung mit einem (vorzugsweise elektrischen, gegebenenfalls hydraulischen und/oder pneumatischen) Aktor zur geregelten Verteilung des Kühlmittels in Abhängigkeit von mindestens einer lokalen Kühlmitteltemperatur umfasst, wobei vorgesehen ist, dass die Regelvorrichtung bei einer Ansteuerung des Aktors in einer (Ansteuer- oder Bewegungs-)Richtung
- in einer ersten Stellung eine Kühlmittelströmung durch den Verbrennungsmotor und den Heizungswärmetauscher zulässt und durch den Bypass sowie den Umgebungswärmetauscher unterbindet;
- in einer zweiten Stellung zusätzlich eine Kühlmittelströmung durch den Bypass zulässt; und
- in einer dritten Stellung zusätzlich (im Vergleich zu zumindest der ersten Stellung) eine Kühlmittelströmung durch den Hauptkühler zulässt.

Eine solche Brennkraftmaschine ermöglicht durch eine intelligente Abfolge eines Zubeziehungsweise Abschaltens der einzelnen Komponenten des Kühlsystems (die hinsichtlich der Durchströmung mittels eines Kühlmittels zu regeln sind) diese mittels lediglich eines anzusteuernden Aktors zu regeln.

Insbesondere kann dabei vorgesehen sein, dass in der ersten Stellung der Regelvorrichtung lediglich ein relativ kleiner Volumenstrom des Kühlmittels mittels der Kühlmittelpumpe durch einen (den Hauptkühler umgehenden) kleinen Kühlkreis des Kühlsystems gefördert wird, wobei lediglich der Verbrennungsmotor (zumindest teilweise) und der Heizungswärmetauscher durchströmt werden. Dadurch, dass nur ein relativ kleiner Volumenstrom des Kühlmittels durch den Verbrennungsmotor gefördert wird, kann insbesondere in einer Warmlaufphase der Brennkraftmaschine ein schnelles Aufwärmen der entsprechenden Teilmenge des Kühlmittels und folglich ein relativ frühes Wirksamwerden des Heizungswärmetauschers und damit einer Heizung eines Kraftfahrzeugs, für dessen Antrieb die Brennkraftmaschine vorzugsweise vorgesehen ist, erreicht werden.

Unter einem "Heizungswärmetauscher" wird folglich ein Wärmetauscher verstanden, in dem ein Wärmeübergang von dem Kühlmittel des Kühlsystems auf Umgebungsluft, die zum Beheizen eines Innenraums eines Kraftfahrzeugs vorgesehen ist, erfolgt. Der Heizungswärmetauscher stellt somit, ebenso wie der Hauptkühler, einen Umgebungswärmetauscher dar.

Durch das Hinzuschalten des Bypasses in der zweiten Stellung der Regelvorrichtung kann dann bei zunehmender Betriebstemperatur der Brennkraftmaschine ein Überhitzten des Kühlsystems vermieden werden, indem, weiterhin in dem kleinen Kühlkreis und somit unter Umgehung des Hauptkühlers, durch den Verbrennungsmotor ein größerer Volumenstrom des Kühlmittels gefördert wird. Der den Heizungswärmetauscher umgehende Bypass kann dabei vorteilhaft sein, weil der maximale Volumenstrom durch den Heizungswärmetauscher, der durch die Querschnitte der Strömungsführungen des Heizungswärmetauschers und der zu diesem hin und von diesem weg führenden Leitungen des Kühlsystems begrenzt ist, vorzugsweise relativ klein dimensioniert ist und folglich nicht der gesamte Volumenstrom des Kühlmittels in der zweiten Stellung der Regelvorrichtung durch den Heizungswärmetauscher geführt werden kann und soll. Dies gilt insbesondere, weil vorgesehen sein kann, dass der Heizungswärmetauscher in der ersten und allen diesen nachfolgenden Stellungen der Regelvorrichtung von dem Kühlmittel durchströmt wird.

In der dritten Stellung der Regelvorrichtung erfolgt dann ein Zuschalten des Hauptkühlers, der durch einen Wärmeübergang von dem Kühlmittel an Umgebungsluft mit insbesondere dem ausschließlichen Zweck einer Kühlung des Kühlmittels. Somit kann vorgesehen sein, dass in der dritten Stellung der Regelvorrichtung das Kühlmittel in einem großen Kühlkreis des Kühlsystems gefördert wird.

Um sicherzustellen, dass in der dritten Stellung das gesamte Kühlmittel durch entweder den Heizungswärmetauscher oder den Hauptkühler geführt wird, kann in einer bevorzugten Ausgestaltung der erfindungsgemäßen Brennkraftmaschine vorgesehen sein, dass die Regelvorrichtung in der dritten Stellung eine Kühlmittelströmung durch den Bypass wieder unterbindet.

Bei einer solchen Brennkraftmaschine ist erfindungsgemäß vorgesehen, dass die Regelvorrichtung in einer vor der ersten Stellung liegenden Nullstellung eine Kühlmittelströmung durch den Verbrennungsmotor unterbindet und durch den Heizungswärmetauscher zulässt.

Dadurch kann ein Heizungskreislauf für das Kühlmittel geschaffen werden, der insbesondere hinsichtlich der in dem Oberbegriff des Patentanspruchs 1 genannten Komponenten des Kühlsystems lediglich die Kühlmittelpumpe und den Heizungswärmetauscher (sowie teilweise die Regelvorrichtung) umfassen kann. Dies kann ermöglichen, die Funktionalität des Heizungswärmetauschers auszunutzen und damit insbesondere eine Innenraumheizung eines erfindungsgemäßen, zumindest eine erfindungsgemäße Brennkraftmaschine (vorzugsweise zur Erzeugung einer Fahrantriebsleistung) umfassenden Kraftfahrzeugs auch dann zu betreiben, wenn eine Kühlfunktionalität zur Kühlung einzelner oder aller übrigen (zu kühlenden) Komponenten des Kühlsystems nicht benötigt wird.

Dies kann insbesondere dann der Fall sein, wenn der Verbrennungsmotor der erfindungsgemäßen Brennkraftmaschine nicht betrieben wird, wodurch von diesem keine Abwärme erzeugt wird, die mittels des Kühlmittels zu insbesondere dem Hauptkühler transportiert und dort an die Umgebungsluft abgegeben werden müsste. Relevant kann dies beispielsweise dann sein, wenn der Verbrennungsmotor der Brennkraftmaschine nicht betrieben wird, dies jedoch für andere Komponenten der Brennkraftmaschine (und somit die Brennkraftmaschine an sich) und gegebenenfalls auch für das erfindungsgemäße Kraftfahrzeug gilt. Dies kann beispielsweise der Fall sein, wenn der Verbrennungsmotor im Stillstand des Kraftfahrzeugs automatisch abgeschaltet worden ist ("Start-Stopp-Automatik"), wobei weiterhin die Funktionalität der Innenraumheizung des Kraftfahrzeugs aufrecht gehalten werden soll. Weiterhin ist ein entsprechender Betriebszustand für das Kraftfahrzeug dann möglich, wenn dieses vor einer vorgesehenen Nutzung vorgewärmt werden soll ("Standheizungsfunktionalität").

Weiterhin kann ein Nichtbetrieb des Verbrennungsmotors der Brennkraftmaschine bei gleichzeitigem Betrieb des Kraftfahrzeugs (und gegebenenfalls auch anderer Komponenten der Brennkraftmaschine) dann vorgesehen sein, wenn es sich bei diesem um ein Hybridfahrzeug handelt, das durch einen zusätzlichen elektrischen Fahrantrieb gekennzeichnet ist. In Betriebszuständen eines solchen Hybridfahrzeugs, in denen die Fahrantriebsleistung ausschließlich durch den elektrischen Fahrantrieb erzeugt wird, ist der Verbrennungsmotor in der Regel nicht in Betrieb, damit von diesem kein Kraftstoff verbraucht wird. Dennoch soll auch in diesen Betriebszuständen bei Bedarf die Funktionalität der Innenraumheizung gegeben sein.

Um auch in dem Nichtbetrieb des Verbrennungsmotors einen Antrieb der Kühlmittelpumpe zu ermöglichen, kann vorzugsweise vorgesehen sein, dass ein Förderelement und insbesondere ein Pumpenrad der Kühlmittelpumpe mittels eines Elektromotors antreibbar ist.

Um dabei eine möglichst flexible Positionierung für den Elektromotor zu ermöglichen, kann weiterhin bevorzugt vorgesehen sein, dass das Förderelement über ein Getriebe, insbesondere ein Riemengetriebe (z.B. Zahnriemengetriebe) oder ein Zahnradgetriebe, von dem Elektromotor antreibbar ist.

Weiterhin bevorzugt kann dann ein Kühlpumpenantriebskühlkreis zur Kühlung des Elektromotors und/oder einer zu dem Elektromotor gehörenden Leistungselektronik vorgesehen sein. Dieser Kühlpumpenantriebskühlkreis ist vorzugsweise direkt ausgebildet, so dass von dem Förderelement der Kühlmittelpumpe gefördertes Kühlmittel (insbesondere ein Teilstrom des von der Kühlmittelpumpe geförderten Gesamtstroms) ausschließlich über den Elektromotor und/oder die dazugehörige Leistungselektronik geführt und nicht zur Kühlung weiterer Komponenten genutzt wird.

Weiterhin bevorzugt kann vorgesehen sein, dass der Elektromotor und/oder die dazugehörige Leistungselektronik in demselben Gehäuse aufgenommen oder an diesem befestigt ist, in das auch die Kühlmittelpumpe integriert ist. Insbesondere kann dadurch ermöglicht werden, die den Kühlpumpenantriebskühlkreis ausbildenden Kühlkanäle zumindest teilweise in dieses Gehäuse zu integrieren. Besonders bevorzugt kann vorgesehen sein, dass ein (ein- oder mehrteiliges) Gehäuse (zumindest) die Kühlmittelpumpe, die Regelvorrichtung und den Elektromotor sowie optional auch die dazugehörige Leistungselektronik aufnimmt beziehungsweise integriert.

Weiterhin wird durch die erfindungsgemäß vorgesehene Möglichkeit, die Kühlmittelpumpe der Brennkraftmaschine elektrisch anzutreiben, auf relativ einfache Weise die Möglichkeit geschaffen, die Förderleistung der Kühlmittelpumpe und damit die Kühlleistung des Kühlsystems im Vergleich zu rein mechanisch angetriebenen Kühlmittelpumpen bei relativ niedrigen Drehzahlen des Verbrennungsmotors zu erhöhen. Diese verbesserte Kühlleistung bei relativ niedrigen Drehzahlen des Verbrennungsmotors kann ermöglichen, den Verbrennungsmotor mit höheren Verdichtungen arbeiten zu lassen, wobei eine sich aus den höheren Verdichtungen in der Regel ergebende höhere Klopfneigung, die insbesondere bei relativ niedrigen Drehzahlen des Verbrennungsmotors zu verzeichnen ist, durch die verbesserte Kühlleistung kompensiert werden kann. Auf diese Weise kann insbesondere ermöglicht werden, den Verbrennungsmotor als Atkinson-Motor oder zumindest derart auszubilden, dass dieser in einem abgeleiteten Atkinson-Prozess betreibbar ist, was zumindest teilweise mit einer relativ hohen Verdichtung des Gases in dem Verbrennungsmotor und damit mit einer relativ hohen Klopfneigung einhergehen kann.

Ein Atkinson-Motor ist in bekannter Weise grundsätzlich durch unterschiedliche Kolbenhübe und damit Hubvolumina für einerseits das Ansaugen und Verdichten und andererseits das Expandieren und Ausstoßen gekennzeichnet. Dies kann mit einer zusätzlichen Kurbelschwinge und einem weiteren Pleuel zwischen Kurbelwelle und Kolben realisiert werden. Bei einer Kurbelwellenumdrehung geht der Kolben dann zweimal auf und ab. Der Vorteil liegt darin, dass das Gas durch den verlängerten Expansionshub des Kolbens weiter entspannt und damit die Abgastemperatur verringert wird, wodurch der Wirkungsgrad erhöht werden kann. Gleichzeitig sinkt jedoch die hubraumspezifische Leistung. Beim sogenannten abgeleiteten Atkinson-Prozess werden die Wirkungen unterschiedlicher Kolbenhübe bei konventionellen Viertakt-Hubkolbenmotoren (insbesondere Ottomotoren) durch veränderte Ventilsteuerzeiten und insbesondere verlängerte Öffnungszeiten der Auslassventile simuliert.

Da in der Nullstellung der Regelvorrichtung eine Durchströmung des Verbrennungsmotors (und insbesondere auch aller übrigen, regelmäßig Wärmeenergie auf das Kühlmittel übertragener Komponenten) nicht vorgesehen ist, fällt dieser (und auch die anderen Komponenten) als Wärmequelle für die Innenraumheizung weg. Vorzugsweise ist daher in das Kühlsystem eine Heizvorrichtung integriert, die in der Nullstellung der Regelvorrichtung von dem Kühlmittel durchströmbar ist (beziehungsweise im Betrieb der Kühlmittelpumpe durchströmt wird). Diese Heizvorrichtung, bei der es sich beispielsweise um eine elektrische (z.B. PTC-Heizelement) oder eine chemische (z.B. Latentwärmespeicher) Heizvorrichtung handeln kann, kann somit in den entsprechenden Betriebszuständen der Brennkraftmaschine beziehungsweise des Kraftfahrzeugs als Ersatzwärmequelle dienen, um die Funktionalität der Innenraumheizung des Kraftfahrzeugs aufrecht zu halten.

In einer weiterhin bevorzugten Ausgestaltung der erfindungsgemäßen Brennkraftmaschine kann vorgesehen sein, dass die Regelvorrichtung in der ersten, zweiten und/oder dritten Stellung, insbesondere in allen Stellungen mit Ausnahme der Nullstellung, eine direkte (d.h. nicht über zumindest einen der übrigen, in dem Oberbegriff des Patentanspruchs 1 genannten Komponenten geführte) Verbindung zwischen der Kühlmittelpumpe und dem Heizungswärmetauscher unterbindet. Dies kann in konstruktiv vorteilhafter Weise dadurch erreicht werden, dass die Regelvorrichtung in der Nullstellung eine von Kühlmittelleitungen des Kühlsystems ausgebildete Verbindung zwischen der Kühlmittelpumpe und dem Verbrennungsmotor verschließt und gleichzeitig eine Verbindung zwischen der Kühlmittelpumpe und dem Heizungswärmetauscher freigibt. Beides kann insbesondere mittels eines einzelnen Verschlusselements erfolgen. Dadurch kann vermieden werden, dass während des Betriebs des Verbrennungsmotors ein Teil des Kühlmittels direkt von der Kühlmittelpumpe zu dem Heizungswärmetauscher gefördert wird, wodurch dieser Teil des Kühlmittels keine Wärmeenergie von zu kühlenden Komponenten der Brennkraftmaschine und insbesondere dem Verbrennungsmotor aufnehmen würde, was jedoch im Betrieb des Verbrennungsmotors gewollt ist, um insbesondere auf den gegebenenfalls vorgesehenen Betrieb der zusätzlichen Heizvorrichtung verzichten zu können.

Vorzugsweise kann vorgesehen sein, dass alle Stellungen der Regelvorrichtung mit Ausnahme der Nullstellung (und der dritten Stellung im Nichtbetrieb der Brennkraftmaschine beziehungsweise des Kraftfahrzeugs) nur im Betrieb des Verbrennungsmotors eingestellt werden.

Eine vorteilhafte Kühlung des Verbrennungsmotors der erfindungsgemäßen Brennkraftmaschine kann erreicht werden, wenn sowohl ein Zylindergehäuse (insbesondere ein Zylinderkurbelgehäuse) als auch ein Zylinderkopf des Verbrennungsmotors jeweils mindestens einen Kühlkanal aufweist, wobei die Kühlkanäle, gesteuert durch die Regelvorrichtung, bedarfsgerecht von dem Kühlmittel durchströmt werden. Dabei kann insbesondere vorgesehen sein, dass die Regelvorrichtung in der ersten Stellung eine Kühlmittelströmung durch den Kühlmittelkanal des Zylinderkopfs zulässt und durch den Kühlmittelkanal des Zylindergehäuses unterbindet. Dadurch kann erreicht werden, dass in einem Betrieb des Verbrennungsmotors der Brennkraftmaschine während einer Warmlaufphase das Kühlmittel lediglich durch den Zylinderkopf (und den Heizungswärmetauscher) der Brennkraftmaschine, der im Vergleich zu dem Zylindergehäuse höher thermisch belastet und eine geringere, in diesem Betriebszustand der Brennkraftmaschine gegebenenfalls noch Wärmeenergie aus dem Kühlmittel aufnehmende Masse aufweist, geführt wird, wodurch nicht nur das für die Heizleistung des Heizungswärmetauschers vorteilhafte schnelle Aufwärmen des Kühlmittels sondern gleichzeitig auch schon eine Kühlung für den Zylinderkopf erreicht werden kann. Ein Durchströmen des Kühlmittelkanals des Zylindergehäuses ist dagegen noch nicht vorgesehen, wodurch erreicht werden kann, dass in diesem Betriebszustand ein schnelleres Erwärmen von Zylinderwänden des Zylindergehäuses erreicht werden kann, was sich positiv auf Reibungsverluste zwischen Zylinder und Kolben sowie auf das Emissionsverhalten der Brennkraftmaschine auswirkt.

Ein Zuschalten des Kühlmittelkanals des Zylindergehäuses in das Kühlsystem erfolgt vorzugsweise erst in einer zwischen der zweiten Stellung und der dritten Stellung liegenden Zwischenstellung der Regelvorrichtung, wobei dann die Betriebstemperatur der Brennkraftmaschine bereits so hoch sein kann, dass eine Kühlung auch des Zylindergehäuses sinnvoll oder notwendig ist.

In einer weiterhin bevorzugten Ausgestaltung der erfindungsgemäßen Brennkraftmaschine kann zudem vorgesehen sein, dass eine Verstellung zwischen zumindest zwei der Stellungen der Regelvorrichtung abgestuft oder stufenlos möglich ist, so dass die Regelvorrichtung in eine oder mehrere Teilstufen stellbar und in diesen auch gehalten werden kann. Dadurch kann eine weiter verbesserte Anpassung einer Durchströmung der einzelnen Komponenten mittels des Kühlmittels in Abhängigkeit von dem tatsächlichen Bedarf erreicht werden.

Weiterhin kann vorgesehen sein, dass die Regelvorrichtung in Abhängigkeit von einem Betriebskennfeld des Verbrennungsmotors der Brennkraftmaschine zwischen mindestens zwei Stellungen der Regelvorrichtung und insbesondere zwischen der zweiten Stellung und der dritten Stellung verstellbar ist. In einem solchen Betriebskennfeld kann insbesondere die Last über der Drehzahl, mit der der Verbrennungsmotor der Brennkraftmaschine betrieben wird, aufgetragen sein. Dadurch kann in vorteilhafter Weise ein Wärmeübergang von dem Kühlmittel auf Umgebungsluft in dem Hauptkühler in Abhängigkeit von dem Betriebszustand und folglich in Abhängigkeit von der Wärmeerzeugung des Verbrennungsmotors gesteuert werden. Dies ermöglicht beispielsweise, eine Temperatur des Kühlmittels möglichst konstant zu halten oder bedarfsweise auf einen definierten Wert(ebereich), der insbesondere auch von dem Betriebszustand des Verbrennungsmotors abhängig sein kann, einzuregeln. Insbesondere kann bei relativ geringer Last und/oder Drehzahl eine höhere Kühlmitteltemperatur eingestellt oder eingeregelt werden, die zu einer entsprechend hohen Öltemperatur und damit relativ geringen Reibungsverlusten führen kann. Bei höherer Last und/oder Drehzahl kann die Kühlmitteltemperatur dagegen zum Schutz des Verbrennungsmotors vor thermischer Überlastung verringert werden. Ermöglicht werden kann dadurch auch eine vorausschauende Regelung einer Temperatur des Kühlmittels, die, anders als beispielsweise eine entsprechende Regelung mittels eines Temperatursensors, nicht auf eine bereits erfolgte Temperaturänderung reagierend ausgebildet ist. Besonders bevorzugt kann dabei vorgesehen sein, dass das Verstellen zwischen den mindestens zwei Stellungen in Abhängigkeit von dem Betriebskennfeld des Verbrennungsmotors abgestuft oder stufenlos vorgesehen ist.

In einer konstruktiv relativ einfach umsetzbaren Ausgestaltung der erfindungsgemäßen Brennkraftmaschine kann vorgesehen sein, dass die Regelvorrichtung einen von dem Aktor translatorisch und/oder rotatorisch bewegten Sperrschieber umfasst, dessen mittels des Aktors bewirkte Bewegung zu einem den Stellungen der Regelvorrichtung entsprechenden Verschließen oder Freigeben von Einlässen und/oder Auslässen, die (in Kombination mit entsprechenden Kühlmittelleitungen) die Regelvorrichtung fluidleitend mit den entsprechenden Komponenten des Kühlsystems verbinden, führt.

Möglicherweise kann es auch vorteilhaft sein, wenn die Regelvorrichtung mehr als einen Sperrschieber umfasst, wobei dann bevorzugt vorgesehen ist, dass nur ein erster der Sperrschieber von dem Aktor bewegt wird, während eine Bewegung des oder der anderen Sperrschieber (in zumindest einem Abschnitt der Bewegung des ersten Sperrschieber) durch den ersten Sperrschieber bewirkt wird.

Als konstruktiv vorteilhaft hat sich gezeigt, wenn die Regelvorrichtung einen von dem Aktor bewegten ersten Sperrschieber und einen von dem ersten Sperrschieber bewegten zweiten Sperrschieber umfasst, wobei der zweite Sperrschieber (vorzugsweise ausschließlich) für das Erreichen der Nullstellung und der ersten Stellung der Regelvorrichtung vorgesehen ist, indem eine Verschlussstellung des zweiten Sperrschiebers die Nullstellung der Regelvorrichtung begründet und dieser für das Erreichen der ersten Stellung in eine Öffnungsstellung bewegt wird. Besonders bevorzugt kann dabei vorgesehen sein, dass der erste Sperrschieber den zweiten Sperrschieber in seinem Bewegungsbereich nur teilweise mitbewegt. Dies ermöglicht insbesondere eine vereinfachte Ausgestaltungen des zweiten Sperrschiebers, der in der bevorzugten Ausgestaltung der erfindungsgemäßen Brennkraftmaschine lediglich bei einem Verstellen der Regelvorrichtung zwischen der Nullstellung und der ersten Stellung (und gegebenenfalls andersherum) bewegt wird, während eine Bewegung des zweiten Sperrschiebers bei einem Verstellen der Regelvorrichtung zwischen den anderen Stellungen mittels des ersten Sperrschiebers nicht mehr vorgesehen ist. Eine solche Koppelung von erstem und zweitem Sperrschieber kann beispielsweise mittels eines Koppelhebelgetriebes, eines Malteserkreuzgetriebes und/oder eines Kurvengetriebe erreicht werden.

Eine Lagesicherung für den gegebenenfalls nicht dauerhaft an den ersten Sperrschieber gekoppelten zweiten Sperrschieber kann insbesondere auf einem Kraftschluss beruhen, indem für ein Bewegen des zweiten Sperrschiebers den Kraftschluss überwindende Kräfte erforderlich sind, die größer sind als diejenigen Kräfte, die sich infolge der Masse des zweiten Sperrschieber, d.h. trägheits- oder schwerkraftbedingt, und/oder aufgrund eines hydraulischen Drucks des Kühlmittels auf den zweiten Sperrschieber in den durch die Lagerung des zweiten Sperrschiebers ermöglichten Bewegungsrichtungen ergeben. Alternativ oder ergänzend kann auch eine formschlüssige Lagesicherung vorgesehen sein. Dabei kann insbesondere eine Lagersicherung des zweiten Sperrschiebers durch den ersten Sperrschieber erfolgen.

Eine konstruktiv einfache und insbesondere hinsichtlich des erforderlichen Bauraums vorteilhafte Ausgestaltungen der erfindungsgemäßen Brennkraftmaschine ist dadurch gekennzeichnet, dass der oder die Sperrschieber als Drehschieber ausgebildet sind.

Die Ansteuerung des Aktors der Regelvorrichtung erfolgt weiterhin bevorzugt in Abhängigkeit von einer dem Verbrennungsmotor zugeordneten lokalen Temperatur, die somit besonders bevorzugt in einem Kühlmittelkanal (besonders bevorzugt an einer Stelle, die einem Auslass dieses Kühlmittelkanals näher gelegen ist als einem Einlass) und/oder in einem an einen Auslass dieses Kühlmittelkanals angeschlossenen Abschnitt des Kühlsystems gemessen wird. Hierzu kann die erfindungsgemäße Brennkraftmaschine einen in dem Kühlmittelkanal des Verbrennungsmotors oder in einer sich in Strömungsrichtung des Kühlmittels direkt an diesen Kühlmittelkanal anschließenden Kühlmittelleitung angeordneten Kühlmitteltemperatursensor aufweisen.

Sofern dabei lediglich ein Temperatursensor vorgesehen sein soll, ist dieser vorzugsweise in einem Kühlmittelkanal des Zylinderkopfs des Verbrennungsmotors angeordnet. Eine verbesserte Regelung der Verteilung des Kühlmittels mittels der Regelvorrichtung kann jedoch dadurch erzielt werden, dass diese in Abhängigkeit von sowohl einer lokalen Temperatur des Kühlmittels in dem Zylinderkopf als auch einer lokalen Temperatur des Kühlmittels in dem Zylindergehäuse angesteuert wird. Demnach kann ein erster, in einem Kühlmittelkanal des Zylinderkopfs angeordneter Kühlmitteltemperatursensor und ein zweiter, in einem Kühlmittelkanal des Zylindergehäuses angeordneter Kühlmitteltemperatursensor vorgesehen sein.

Bei dem erfindungsgemäßen Kraftfahrzeug kann es sich insbesondere um ein radbasiertes Kraftfahrzeug (vorzugsweise PKW oder LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die erfindungsgemäße Brennkraftmaschine wird nachfolgend anhand eines in den Zeichnungen dargestellten Ausführungsbeispiels näher erläutert. In den Zeichnungen zeigt:
- Fig. 1:: eine erfindungsgemäße Brennkraftmaschine schematisch in einem Blockschaltbild;
- Fig. 2:: eine Regelvorrichtung für eine erfindungsgemäße Brennkraftmaschine in einer ersten perspektivischen Ansicht;
- Fig. 3:: die Regelvorrichtung gemäß der Fig. 2 in einer zweiten perspektivischen Ansicht;
- Fig. 4:: die Regelvorrichtung gemäß den Fig. 2 und 3 in einer Explosionsdarstellung;
- Fig. 5:: die Regelvorrichtung gemäß den Fig. 2 bis 4 mit nur teilweise gezeigtem Gehäuse;
- Fig. 6:: einen Aktor und die von diesem direkt oder indirekt betätigten Sperrschieber der Regelvorrichtung gemäß den Fig. 2 bis 5 in isolierter Darstellung;
- Fig. 7:: einen Querschnitt durch die Regelvorrichtung gemäß den Fig. 2 bis 6 mit der Regelvorrichtung in einer Nullstellung;
- Fig. 8:: eine Darstellung gemäß der Fig. 7 mit der Regelvorrichtung in einer ersten Stellung;
- Fig. 9:: den Antrieb der in das Gehäuse der Regelvorrichtung gemäß den Fig. 2 bis 8 integrierten Kühlmittelpumpe mittels eines Elektromotors; und
- Fig. 10:: die Durchströmung der einzelnen Komponenten einer erfindungsgemäßen Brennkraftmaschine gemäß der Fig. 1 mittels des Kühlmittels in Abhängigkeit von den verschiedenen Stellungen der dazugehörigen Regelvorrichtung bei angetriebener Kühlmittelpumpe.

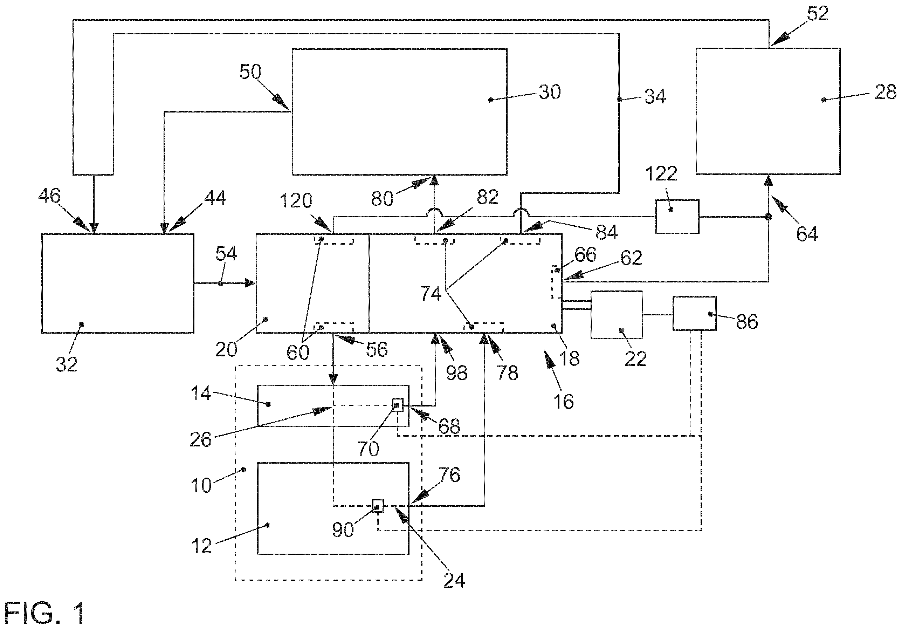

Die Fig. 1 zeigt schematisch eine erfindungsgemäße Brennkraftmaschine. Diese umfasst einen Verbrennungsmotor 10, der beispielsweise als nach dem Otto- oder Diesel-Prinzip arbeitender Hubkolben-Verbrennungsmotor ausgebildet sein kann und ein Zylindergehäuse 12 sowie einen Zylinderkopf 14 umfasst. Weiterhin weist die Brennkraftmaschine noch eine Regelvorrichtung 16 mit einem ersten Sperrschieber 18, einem zweiten Sperrschieber 20 und einem Aktor 22 auf. Der erste Sperrschieber 18 ist mittels des Aktors 22 bewegbar, während der zweite Sperrschieber 20 in einem Abschnitt der möglichen Gesamtbewegung des ersten Sperrschiebers 18 von diesem mitbewegt wird.

Die Regelvorrichtung 16 ist in ein Kühlsystem der Brennkraftmaschine integriert. In dieses Kühlsystem sind zudem noch Kühlmittelkanäle 24, 26 des Zylindergehäuses 12 und des Zylinderkopfs 14, ein Heizungswärmetauscher 28, ein Hauptkühler 30 sowie eine Kühlmittelpumpe 32 integriert. Die einzelnen Komponenten des Kühlsystems sind dabei über Kühlmittelleitungen fluidleitend verbunden. Weiterhin umfasst das Kühlsystem noch einen Bypass 34, der unter Umgehung sowohl des Heizungswärmetauschers 28 als auch des Hauptkühlers 30 einen Auslass 84 der Regelvorrichtung 16 mit einem Einlass 46 der Kühlmittelpumpe 32 verbindet.

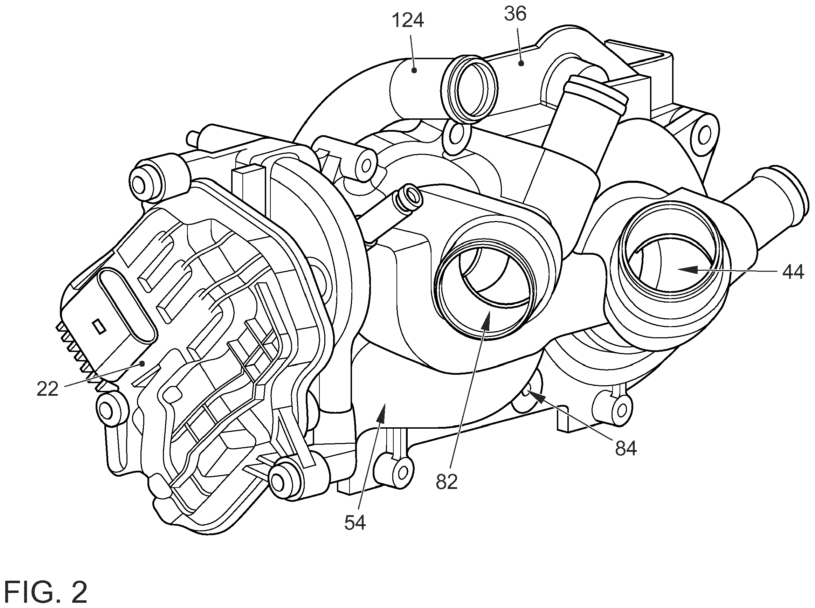

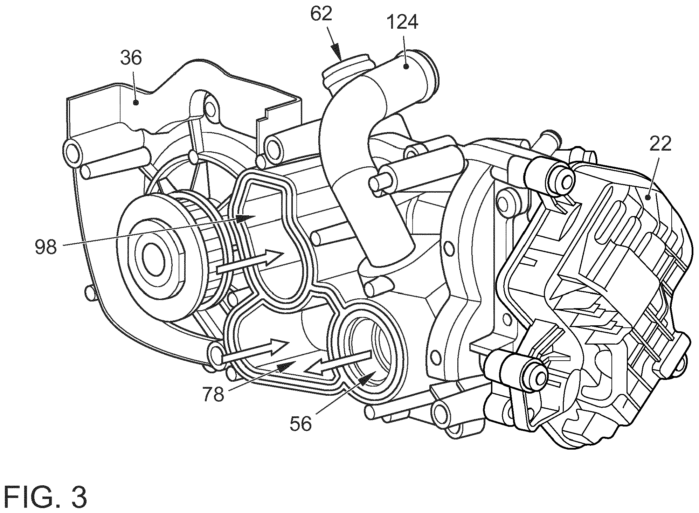

Die Fig. 2 bis 9 zeigen eine mögliche konstruktive Ausgestaltung der Regelvorrichtung 16 gemäß der Fig. 1. Bei dieser Regelvorrichtung 16 sind die Sperrschieber 18, 20 in Form von Drehschiebern ausgebildet, die in Abhängigkeit von ihrer jeweiligen Drehausrichtung Ein- und Auslässe für das die Regelvorrichtung 16 durchströmende Kühlmittel verschließen oder freigeben.

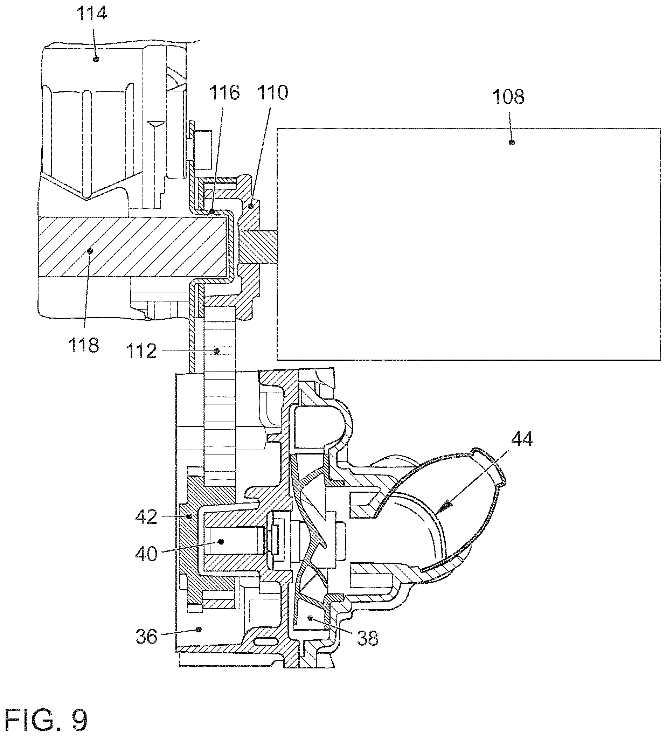

Die Regelvorrichtung 16 umfasst ein Gehäuse 36, in das auch ein Pumpenrad 38 einer als Flügelradpumpe ausgebildeten Kühlmittelpumpe 32 drehbar integriert ist. Eine Rotation des Pumpenrads 38 und damit ein Fördern von Kühlmittel in dem Kühlsystem wird durch einen Elektromotor 108 bewirkt, der über ein Zahnriemengetriebe mit einer Welle 40 des Pumpenrads 38 verbunden ist. Das Zahnriemengetriebe umfasst ein mit der Welle 40 des Pumpenrads 38 verbundenes erstes Riemenrad 42, ein mit einer Motorwelle des Elektromotors 108 verbundenen zweites Riemenrad 110 und einen Zahnriemen 112 (vgl. Fig. 9).

Das zweite Riemenrad 110 umgibt topfartig einen von einem Zylinderkopfgehäuse 114 hervorstehenden Abschnitt einer Nockenwellenabdeckung 116, wobei dieser Abschnitt der Nockenwellenabdeckung 116 topfartig einen aus dem Zylinderkopfgehäuse 114 herausragenden Endabschnitt einer in etwa koaxial zu der Welle des Elektromotors 108 ausgerichteten Nockenwelle 118 umgibt. Ein solcher Zylinderkopf 14 eignet sich (ohne relevante bauliche Änderungen) sowohl für die hier dargestellte Kombination mit einer von einem Elektromotor 108 angetriebenen Kühlmittelpumpe 32 als auch für einen mechanischen Antrieb der Kühlmittelpumpe 32, in dem unter Weglassung des Elektromotors 108 und der Nockenwellenabdeckung 116 ein passendes (zweites) Riemenrad als Teil des Zahnriemengetriebes mit dem aus dem Zylinderkopfgehäuse 114 herausragenden Endabschnitt der Nockenwelle 118 verbunden ist. Die Wahl des optionalen Antriebs der Kühlmittelpumpe 32 mittels entweder des Elektromotors 108 oder der Nockenwelle 118 kann insbesondere davon abhängig gemacht werden, ob die Brennkraftmaschine in einem Hybridfahrzeugs mit einem zusätzlichen elektrischen Fahrantrieb kombiniert wird oder dies in einem konventionellen Kraftfahrzeug nicht gegeben ist. Im ersten Fall können durch den Antrieb der Kühlmittelpumpe 32 mittels des Elektromotors 108 relevante Vorteile realisiert werden, während im zweiten Fall der Antrieb der Kühlmittelpumpe 32 durch die Nockenwelle 118 kostengünstiger umsetzbar sein kann.

Zur Förderung des Kühlmittels wird dem Pumpenrad 38 Kühlmittel über einen ersten Einlass 44 und einen zweiten Einlass 46 der Kühlmittelpumpe 32 zugeführt. Der erste Einlass 44 ist über eine Kühlmittelleitung mit einem Auslass 50 des Hauptkühlers 30 verbunden. Der zweite Einlass 46 ist über Kühlmittelleitungen mit sowohl dem Bypass 34 als auch einem Auslass 52 des Heizungswärmetauschers 28 verbunden. Dabei ist vorgesehen, dass die den Bypass 34 ausbildende Kühlmittelleitung als Kanal in das Gehäuse 36 integriert ist.

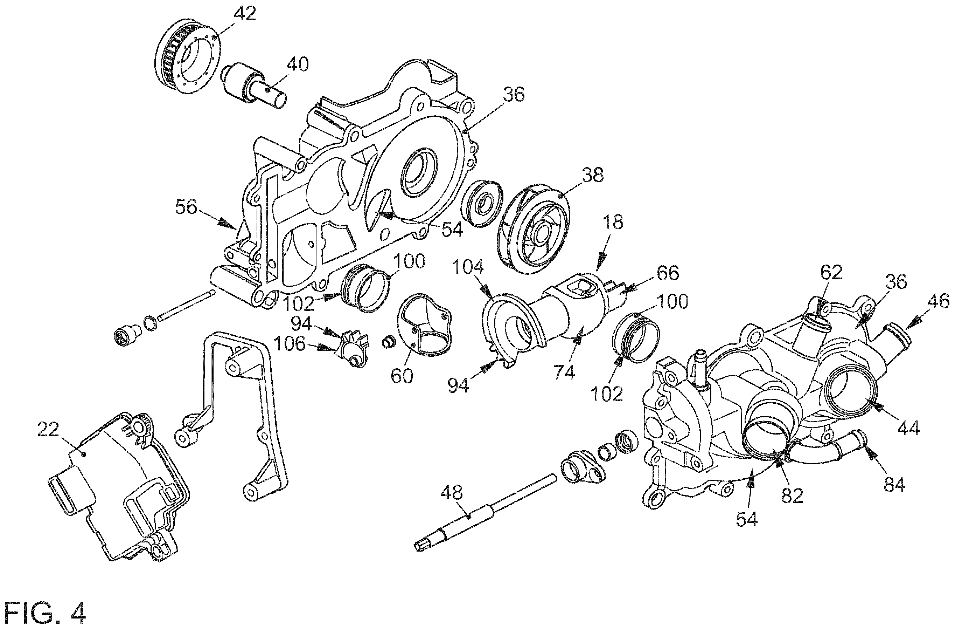

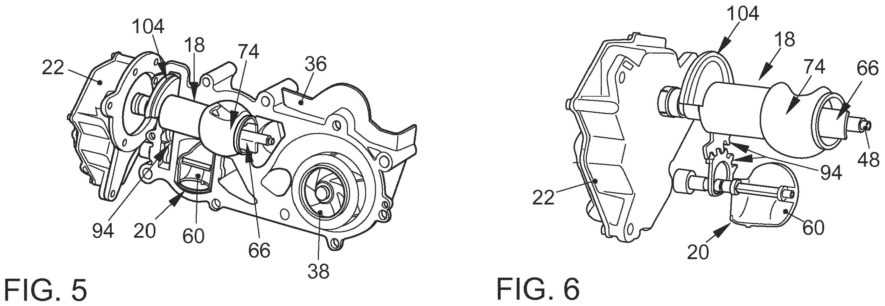

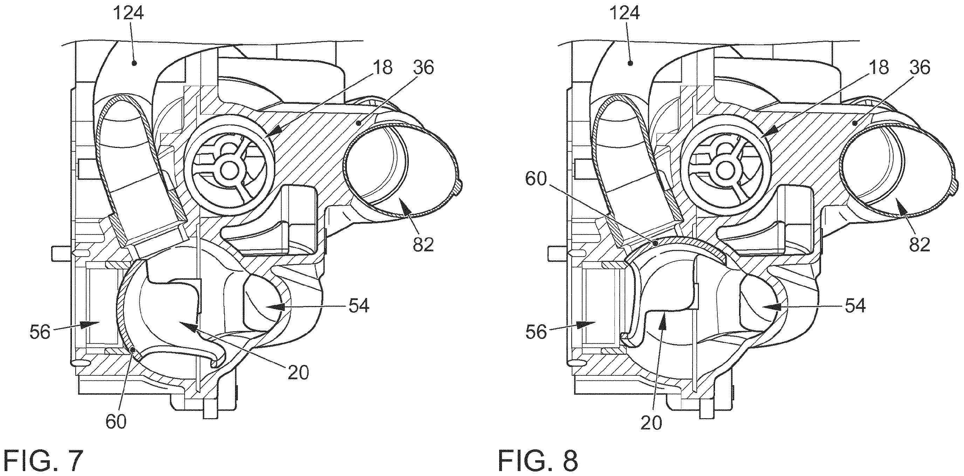

Durch die Rotation des Pumpenrads 38 wird das Kühlmittel durch einen innerhalb des Gehäuses 36 ausgebildeten Kühlmittelkanal 54 zu einem ersten Auslass 56 der Regelvorrichtung 16 geführt. Dieser erste Auslass 56 ist in einer Nullstellung 58 der Regelvorrichtung 16 mittels eines Verschlusselements 60 des in einer Verschlussstellung befindlichen zweiten Sperrschiebers 20 verschlossen (vgl. auch Fig. 7). Dadurch ist eine Kühlmittelförderung durch den Verbrennungsmotor 10 unterbunden. Gleichzeitig ist jedoch eine Verbindung zwischen dem von dem Pumpenrad 38 kommenden Kühlmittelkanal 54 und einem zweiten Auslass 120 der Regelvorrichtung 16 von dem Verschlusselement 60 freigegeben, so dass von der Kühlmittelpumpe 32 gefördertes Kühlmittel über den zweiten Auslass 120 und einen (in den Fig. 4 und 5 nicht dargestellten) Anschlussstutzen 124 über eine beispielsweise elektrisch betriebene Heizvorrichtung 122 zu einem Einlass 64 des Heizungswärmetauschers 28 und von diesem wieder zu der Kühlmittelpumpe 32 geführt wird. In der Nullstellung 58 der Regelvorrichtung 16 wird das Kühlmittel demnach in einem lediglich die Heizvorrichtung 122, den Heizungswärmetauscher 28 und die Kühlmittelpumpe 32 umfassenden Heizungskreislauf gefördert. Dies ist in einem Nichtbetrieb des Verbrennungsmotors 10 bei gleichzeitig geforderter Funktionalität einer über den Heizungswärmetauscher 28 mit Wärmeenergie versorgten Innenraumheizung vorgesehen, wie dies insbesondere bei einem eine erfindungsgemäße Brennkraftmaschine umfassenden Hybridfahrzeug während der temporären Bereitstellung der Fahrantriebsleistung ausschließlich mittels eines zusätzlichen elektrischen Fahrantriebs gegeben sein kann.

In der Nullstellung 58 der Regelvorrichtung 16 befindet sich der erste Sperrschieber 18 in einer Ausrichtung, bei der ein dritter Auslass 62 der Regelvorrichtung 16, der über eine Kühlmittelleitung ebenfalls mit dem Einlass 64 des Heizungswärmetauschers 28 verbunden ist, mittels eines ersten Verschlusselements 66 des ersten Sperrschiebers 18 verschlossen ist.

Während eines Kaltstarts der Brennkraftmaschine ist vorgesehen, kein Kühlmittel durch das Kühlsystem zu fördern, indem der Elektromotor 108 nicht in Betrieb genommen ist. Ein Kaltstart der Brennkraftmaschine ist dadurch gekennzeichnet, dass die Komponenten der Brennkraftmaschine Temperaturen aufweisen, die im Wesentlichen der Umgebungstemperatur entsprechen, zumindest jedoch unterhalb einer definierten Grenztemperatur liegen. Auf diese Weise wird eine Kühlwirkung des Kühlmittels für die verschiedenen zu kühlenden Komponenten des Kühlsystems vermieden, so dass sich diese und insbesondere der primär im Betrieb der Brennkraftmaschine Abwärme übertragende Zylinderkopf 14 möglichst schnell erwärmen, was sich positiv auf den Kraftstoffverbrauch und die Zusammensetzung des von dem Verbrennungsmotor 10 erzeugten Abgases auswirkt.

Nach einem Kaltstart der Brennkraftmaschine und dem Erreichen eines definierten ersten Grenzwerts für eine lokale Kühlmitteltemperatur, die mittels eines ersten, in der Nähe eines Auslasses 68 des Zylinderkopfs 14 in den Kühlmittelkanal 26 integrierten ersten Kühlmitteltemperatursensors 70 gemessen wird, erfolgt ein Verstellen der Regelvorrichtung 16 von der Nullstellung 58 in eine erste Stellung 72 mittels des Aktors 22. Der Aktor 22 wird dazu von einer Motorsteuerung 86 der Brennkraftmaschine, der das Signal des Kühlmitteltemperatursensors 70 übermittelt wird, angesteuert. Dabei kann vorgesehen sein, dass das Verstellen der Regelvorrichtung 16 von der Nullstellung 58 in die erste Stellung 72 in Abhängigkeit von der mittels des ersten Kühlmitteltemperatursensors 70 gemessenen lokalen Kühlmitteltemperatur abgestuft oder stufenlos durch ein an einen Temperaturanstieg gebundenes Verdrehen des ersten Sperrschieber 18 und des damit noch drehend gekoppelten zweiten Sperrschieber 20 bewirkt wird. Möglich kann dabei auch ein zwischenzeitliches Zurückdrehen der Sperrschieber 18,20 sein. Ein Verdrehen des ersten Sperrschiebers 18 erfolgt mittels des Aktors 22, der mit dem ersten Sperrschieber 18 über eine Welle 48 verbunden ist.

In der ersten Stellung der Regelvorrichtung 16 befindet sich der zweite Sperrschieber 20 in einer Öffnungsstellung, in der der erste Auslass 56 nicht mehr von dem Verschlusselement 60 verschlossen sondern im Wesentlichen vollständig freigegeben ist. Gleichzeitig verschließt das Verschlusselement 60 des zweiten Sperrschiebers 20 nunmehr jedoch den zweiten Auslass 120, wodurch der den Verbrennungsmotor 10 umgehende Heizungskreislauf unterbrochen ist.

In der ersten Stellung der Regelvorrichtung 16 befindet sich der erste Sperrschieber 18 in einer Ausrichtung, in der dessen erstes Verschlusselement 66 den dritten Auslass 62 nicht mehr verschließt sondern im Wesentlichen vollständig freigibt. Gleichzeitig verschließt ein zweites Verschlusselement 74 des ersten Sperrschiebers 18 einen mit einem Auslass 76 des Zylindergehäuses 12 in Verbindung stehenden ersten Einlass 78 der Regelvorrichtung 16, einen mit einem Einlass 80 des Hauptkühlers 30 über eine Kühlmittelleitung in Verbindung stehenden vierten Auslass 82 der Regelvorrichtung 16 sowie einen mit dem Bypass 34 verbundenen fünften Auslass 84 der Regelvorrichtung 16. In der ersten Stellung der Regelvorrichtung 16 wird somit eine durch die Kühlmittelpumpe 32 bewirkte zirkulierende Förderung des Kühlmittels lediglich in einem kleinen, die Kühlmittelpumpe 32, die Regelvorrichtung 16, den Zylinderkopf 14 und den Heizungswärmetauscher 28 umfassenden Kühlkreis bewirkt.

Nach dem Erreichen eines definierten zweiten Grenzwerts für die mittels des ersten Kühlmitteltemperatursensors 70 gemessene lokale Kühlmitteltemperatur in dem Zylinderkopf 14 wird die Regelvorrichtung 16 von der ersten Stellung 72 in eine zweite Stellung 88 verstellt. Dabei wird der erste Sperrschieber 18 in eine Ausrichtung verdreht, in der der fünfte Auslass 84 von dem zweiten Verschlusselement 74 zunehmend freigegeben wird, wodurch der Bypass 34 parallel zu dem Heizungswärmetauscher 28 in den kleinen Kühlkreis integriert wird. Der erste Einlass 78 und der vierte Auslass 82 der Regelvorrichtung 16 sind dabei weiterhin von dem ersten Sperrschieber 18 verschlossen. Der zweite Sperrschieber 20 verbleibt während dieser Bewegung des ersten Sperrschiebers 18 in seiner Öffnungsstellung, da dieser nicht mehr drehend an den ersten Sperrschieber 18 gekoppelt ist.

Durch die Integration des Bypasses 34 in den Kühlkreislauf kann der insgesamt geförderte Volumenstrom des Kühlmittels erhöht werden, um eine entsprechend hohe Kühlleistung für den Zylinderkopf 14 zu erreichen.

Die nur phasenweise Drehkopplung des ersten Sperrschiebers 18 an den zweiten Sperrschieber 20 wird durch Segmentverzahnungen 94 bewirkt, die nur dann miteinander in Eingriff sind, wenn der erste Sperrschieber 18 zwischen der Nullstellung 58 und der ersten Stellung 72 der Regelvorrichtung 16 hin und her gedreht wird. Eine Lagesicherung des zweiten Sperrschiebers 20 in seiner Öffnungsstellung wird formschlüssig durch den ersten Sperrschieber 18 erreicht, indem ein sich an die Segmentverzahnung 94 des ersten Sperrschiebers 18 anschließender Ringabschnitt 104 in eine sich an die Segmentverzahnung 94 des zweiten Sperrschiebers 20 anschließende konkave Vertiefung 106 eingreift und in dieser bei der Rotation des ersten Sperrschiebers 18 gleitend bewegt wird.

Nach einem Erreichen eines definierten dritten Grenzwerts für die mittels des ersten Kühlmitteltemperatursensors 70 gemessene lokale Kühlmitteltemperatur in dem Zylinderkopf 14 und/oder nach einem Erreichen eines ersten definierten Grenzwerts für eine mittels eines zweiten, in der Nähe des Auslasses 76 des Zylindergehäuses 12 angeordneten Kühlmitteltemperatursensors 90 gemessene lokale Kühlmitteltemperatur in dem Zylindergehäuse 12 wird die Regelvorrichtung 16 von der zweiten Stellung 88 in eine Zwischenstellung 92 verstellt. Dabei wird der erste Sperrschieber 18 in eine Ausrichtung verdreht, in der das zweite Verschlusselement 74 zusätzlich auch den ersten Einlass 78 der Regelvorrichtung 16 zunehmend freigibt. Folglich wird von diesem dann lediglich noch der vierte Auslass 82 der Regelvorrichtung 16 verschlossen gehalten und damit eine Durchströmung des Hauptkühlers 30 unterbunden. In der Zwischenstellung 92 ist somit auch eine Durchströmung des Zylindergehäuses 12 durch das Kühlmittel vorgesehen.

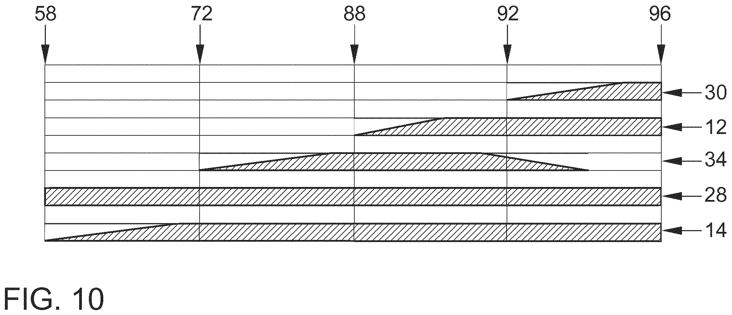

Nach dem Erreichen eines definierten vierten Grenzwerts für die mittels des ersten Kühlmitteltemperatursensors 70 gemessene lokale Kühlmitteltemperatur in dem Zylinderkopf 14 und/oder nach dem Erreichen eines zweiten definierten Grenzwerts für die mittels des zweiten Kühlmitteltemperatursensors 90 gemessene lokale Kühlmitteltemperatur in dem Zylindergehäuse 12 und/oder in Abhängigkeit von einem in der Motorsteuerung 86 abgespeicherten Betriebskennfeld der Brennkraftmaschine wird die Regelvorrichtung 16 von der Zwischenstellung 92 in eine dritte Stellung 96 verstellt. Dabei erfolgt ein zunehmendes Freigegeben des dritten Auslasses 82 der Regelvorrichtung 16 und folglich ein Einbinden des Hauptkühlers 30 in einen dann großen Kühlkreis, während gleichzeitig in zunehmendem Maße der vierte Auslass 84 der Regelvorrichtung 16 durch das zweite Verschlusselement 74 des ersten Sperrschieber 18 wieder verschlossen wird (vgl. Fig. 10). Dadurch wird sichergestellt, dass, mit Ausnahme eines vergleichsweise geringen Teils der Kühlmittelströmung, der durch den Heizungswärmetauscher 28 geführt wird, das Kühlmittel vollständig über den Hauptkühler 30 geleitet wird und darin durch einen Wärmeübergang auf Umgebungsluft gekühlt wird.

Die dritte Stellung 96 der Regelvorrichtung 16 ist weiterhin für einen Nichtbetrieb der Brennkraftmaschine vorgesehen. Dadurch soll zum einen eine "Failsafe"-Funktionalität realisiert werden, durch die bei einem Defekt des Aktors der Regelvorrichtung, der beispielsweise durch Marderbiss im Nichtbetrieb eines von der Brennkraftmaschine antreibbaren Kraftfahrzeugs hervorgerufen worden sein kann, ein (funktional eingeschränkter) Betrieb des Kühlsystems weiterhin gewährleistet werden kann. Weiterhin erleichtert die dritte Stellung 96 der Regeleinrichtung im Nichtbetrieb der Brennkraftmaschine ein Befüllen und Entleeren des Kühlsystems im Rahmen von Wartungsarbeiten.

Das Gehäuse 36 der Regelvorrichtung 16 ist für ein direktes Verschrauben mit dem Zylinderkopf 14 des Verbrennungsmotors 10 an derjenigen Seite, die den ersten Auslass 56, den ersten Einlass 78 sowie einen zweiten Einlass 98, der mit dem Auslass 68 des Zylinderkopfs 14 verbunden ist, ausbildet, vorgesehen.

Eine Abdichtung des ersten Sperrschieber 18 und des zweiten Sperrschieber 20 in dem Gehäuse 36 wird über jeweils ein (mittels einer Tellerfeder 102) federbelastetes, ringförmiges Dichtungselement 100 bewirkt.

### BEZUGSZEICHENLISTE

- 10: Verbrennungsmotor
- 12: Zylindergehäuse
- 14: Zylinderkopf
- 16: Regelvorrichtung
- 18: erster Sperrschieber
- 20: zweiter Sperrschieber
- 22: Aktor
- 24: Kühlmittelkanal des Zylindergehäuses
- 26: Kühlmittelkanal des Zylinderkopfs
- 28: Heizungswärmetauscher
- 30: Hauptkühler
- 32: Kühlmittelpumpe
- 34: Bypass
- 36: Gehäuse
- 38: Pumpenrad
- 40: Welle
- 42: erstes Riemenrad
- 44: erster Einlass der Kühlmittelpumpe
- 46: zweiter Einlass der Kühlmittelpumpe
- 48: Welle
- 50: Auslass des Hauptkühlers
- 52: Auslass des Heizungswärmetauschers
- 54: Kühlmittelkanal
- 56: erster Auslass der Regelvorrichtung
- 58: Nullstellung der Regelvorrichtung
- 60: Verschlusselement des zweiten Sperrschiebers
- 62: dritter Auslass der Regelvorrichtung
- 64: Einlass des Heizungswärmetauschers
- 66: erstes Verschlusselement des ersten Sperrschiebers
- 68: Auslass des Zylinderkopfs
- 70: erster Kühlmitteltemperatursensor
- 72: erste Stellung der Regelvorrichtung
- 74: zweites Verschlusselement des ersten Sperrschiebers
- 76: Auslass des Zylindergehäuses
- 78: erster Einlass der Regelvorrichtung
- 80: Einlass des Hauptkühlers
- 82: vierter Auslass der Regelvorrichtung
- 84: fünfter Auslass der Regelvorrichtung
- 86: Motorsteuerung
- 88: zweite Stellung der Regelvorrichtung
- 90: zweiter Kühlmitteltemperatursensor
- 92: Zwischenstellung der Regelvorrichtung
- 94: Segmentverzahnung
- 96: dritte Stellung der Regelvorrichtung
- 98: zweiter Einlass der Regelvorrichtung
- 100: Dichtungselement
- 102: Tellerfeder
- 104: Ringabschnitt
- 106: Vertiefung
- 108: Elektromotor
- 110: zweites Riemenrad
- 112: Zahnriemen
- 114: Zylinderkopfgehäuse
- 116: Nockenwellenabdeckung
- 118: Nockenwelle
- 120: zweiter Auslass der Regelvorrichtung
- 122: Heizvorrichtung
- 124: Anschlussstutzen

## Patentansprüche

1. Brennkraftmaschine mit einem Verbrennungsmotor (10) und einem Kühlsystem, das eine Kühlmittelpumpe (32), einen Hauptkühler (30), einen Heizungswärmetauscher (28), einen den Heizungswärmetauscher (28) umgehenden Bypass (34), Kühlmittelkanäle (24, 26) in dem Verbrennungsmotor (10) sowie eine Regelvorrichtung (16) mit einem Aktor (22) zur geregelten Verteilung eines Kühlmittels in Abhängigkeit von mindestens einer lokalen Kühlmitteltemperatur umfasst, wobei die Regelvorrichtung (16) bei einer Ansteuerung des Aktors (22) in einer Richtung
- in einer ersten Stellung (72) eine Kühlmittelströmung durch den Verbrennungsmotor (10) und den Heizungswärmetauscher (28) zulässt und durch den Bypass (34) sowie den Hauptkühler (30) unterbindet;
- in einer zweiten Stellung (88) zusätzlich eine Kühlmittelströmung durch den Bypass (34) zulässt; und
- in einer dritten Stellung (96) zusätzlich eine Kühlmittelströmung durch den Hauptkühler (30) zulässt,
**dadurch gekennzeichnet, dass** die Regelvorrichtung (16) in einer vor der ersten Stellung (72) liegenden Nullstellung (58) eine Kühlmittelströmung durch den Verbrennungsmotor (10) unterbindet und durch den Heizungswärmetauscher (28) zulässt.

2. Brennkraftmaschine gemäß Anspruch 1, **gekennzeichnet durch** eine in der Nullstellung (58) der Regelvorrichtung (16) von dem Kühlmittel durchströmbare Heizvorrichtung (122).

3. Brennkraftmaschine gemäß Anspruch 1 oder 2, **dadurch gekennzeichnet, dass** die Regelvorrichtung (16) in der ersten (72), zweiten (88) und/oder dritten Stellung (96) eine direkte Verbindung zwischen der Kühlmittelpumpe (32) und dem Heizungswärmetauscher (28) unterbindet.

4. Brennkraftmaschine gemäß einem der vorhergehenden Ansprüche, **dadurch gekennzeichnet, dass** die Regelvorrichtung (16) in der dritten Stellung (96) eine Kühlmittelströmung durch den Bypass (34) wieder unterbindet.

5. Brennkraftmaschine gemäß einem der vorhergehenden Ansprüche, **dadurch gekennzeichnet, dass** die Regelvorrichtung einen von dem Aktor (22) bewegten ersten Sperrschieber (18) und einen von dem ersten Sperrschieber (18) bewegten zweiten Sperrschieber (20) umfasst, wobei eine Verschlussstellung des zweiten Sperrschiebers (20) die Nullstellung der Regelvorrichtung darstellt.

6. Brennkraftmaschine gemäß Anspruch 5, **dadurch gekennzeichnet, dass** der erste Sperrschieber (18) in seinem Bewegungsbereich den zweiten Sperrschieber (20) nur abschnittsweise mitbewegt.

7. Brennkraftmaschine gemäß einem der Ansprüche 5 oder 6, **dadurch gekennzeichnet, dass** der oder die Sperrschieber (18, 20) als Drehschieber ausgebildet sind.

8. Brennkraftmaschine gemäß einem der vorherigen Ansprüche, **gekennzeichnet durch** einen in einem Kühlmittelkanal (24, 26) des Verbrennungsmotors (10) angeordneten Kühlmitteltemperatursensor (70, 90).

9. Brennkraftmaschine gemäß einem der vorherigen Ansprüche, **dadurch gekennzeichnet, dass** die Regelvorrichtung (16) in Abhängigkeit von einem Betriebskennfeld der Brennkraftmaschine zwischen der zweiten Stellung (88) und der dritten Stellung (96) verstellbar ist.

10. Brennkraftmaschine gemäß einem der vorherigen Ansprüche, **dadurch gekennzeichnet, dass** ein Förderelement der Kühlmittelpumpe (32) mittels eines Elektromotors (108) antreibbar ist.

11. Brennkraftmaschine gemäß Anspruch 10, **dadurch gekennzeichnet, dass** das Förderelement über ein Getriebe von dem Elektromotor (108) antreibbar ist.

12. Brennkraftmaschine gemäß Anspruch 10 oder 11, **gekennzeichnet durch** einen Kühlpumpenantriebskühlkreis zur Kühlung des Elektromotors (108) und/oder einer dazugehörigen Leistungselektronik.

13. Kraftfahrzeug mit einer zur Erzeugung einer Fahrantriebsleistung vorgesehen Brennkraftmaschine gemäß einem der vorhergehenden Ansprüche.

14. Kraftfahrzeug gemäß Anspruch 13, **gekennzeichnet durch** einen zusätzlichen elektrischen Fahrantrieb.

15. Verfahren zum Betreiben eines Kraftfahrzeugs gemäß Anspruch 14, **dadurch gekennzeichnet, dass** die Regelvorrichtung (16) im Nichtbetrieb des Verbrennungsmotors (10) und bei der Erzeugung der Fahrantriebsleistung durch den elektrischen Fahrantrieb in der Nullstellung gehalten wird.

## Claims

1. Internal combustion engine with a combustion engine (10) and a cooling system, which comprises a coolant pump (32), a radiator (30), a heating heat exchanger (28), a bypass (34) bypassing the heating heat exchanger (28), coolant channels (24, 26) in the combustion engine (10) and a regulating device (16) with an actuator (22) for the regulated distribution of a coolant as a function of at least one local coolant temperature, wherein the regulating device (16) upon an activation of the actuator (22) in a direction
- permits in a first position (72) a coolant flow through the combustion engine (10) and the heating heat exchanger (28) and prevents a coolant flow through the bypass (34) and the radiator (30);
- in a second position (88) additionally permits a coolant flow through the bypass (34); and
- in a third position (96) additionally permits a coolant flow through the radiator (30),
**characterized in that** the regulating device (16) in a zero position (58) located before the first position (72), prevents a coolant flow through the combustion engine (10) and permits a coolant flow through the heating heat exchanger (28).

2. Internal combustion engine according to Claim 1, **characterized by** a heating device (122) which can be flowed through by the coolant in the zero position (58) of the regulating device (16).

3. Internal combustion engine according to Claim 1 or 2, **characterized in that** the regulating device (16) in the first (72), second (88) and/or third position (96) prevents a direct connection between the coolant pump (32) and the heating heat exchanger (28).

4. Internal combustion engine according to any one of the preceding claims, **characterized in that** the regulating device (16) in the third position (96) again prevents a coolant flow through the bypass (34).

5. Internal combustion engine according to any one of the preceding claims, **characterized in that** the regulating device comprises a first gate valve (18) moved by the actuator (22) and a second gate valve (20) moved by the first gate valve (18), wherein a closure position of the second gate valve (20) represents the zero position of the regulating device.

6. Internal combustion engine according to Claim 5, **characterized in that** the first gate valve (18) in its movement range co-moves the second gate valve (20) only in certain sections.

7. Internal combustion engine according to either of Claims 5 and 6, **characterized in that** the gate valve or gate valves (18, 20) are designed as rotary slide valves.

8. Internal combustion engine according to any one of the preceding claims, **characterized by** a coolant temperature sensor (70, 90) arranged in a coolant channel (24, 26) of the combustion engine (10).

9. Internal combustion engine according to any one of the preceding claims, **characterized in that** the regulating device (16) is adjustable as a function of an operating characteristic diagram of the internal combustion engine between the second position (88) and the third position (96) .

10. Internal combustion engine according to any one of the preceding claims, **characterized in that** a delivery element of the coolant pump (32) is driveable by means of an electric motor (108).

11. Internal combustion engine according to Claim 10, **characterized in that** the delivery element is driveable by the electric motor (108) via a transmission.

12. Internal combustion engine according to Claim 10 or 11, **characterized by** a cooling pump drive cooling circuit for cooling the electric motor (108) and/or associated power electronics.

13. Motor vehicle with an internal combustion engine provided for generating a propulsion drive power according to any one of the preceding claims.

14. Motor vehicle according to Claim 13, **characterized by** an additional electric propulsion drive.

15. Method for operating a motor vehicle according to Claim 14, **characterized in that** the regulating device (16) during the non-operation of the combustion engine (10) and during the generation of the propulsion drive power by the electric propulsion drive is held in the zero position.

## Revendications

1. Moteur à combustion interne comprenant un moteur thermique (10) et un système de refroidissement, qui comprend une pompe à réfrigérant (32), un radiateur principal (30), un échangeur de chaleur de chauffage (28), une dérivation (34) contournant l'échangeur de chaleur de chauffage (28), des canaux de réfrigérant (24, 26) dans le moteur thermique (10) ainsi qu'un dispositif de régulation (16) avec un actionneur (22) pour la distribution régulée d'un réfrigérant en fonction d'au moins une température de réfrigérant locale, le dispositif de régulation (16), lorsque l'actionneur (22) est commandé dans une direction,
- autorisant, dans une première position (72), un écoulement de réfrigérant à travers le moteur thermique (10) et l'échangeur de chaleur de chauffage (28) et bloquant l'écoulement de réfrigérant à travers la dérivation (34) et le radiateur principal (30) ;
- dans une deuxième position (88), autorisant en outre un écoulement de réfrigérant à travers la dérivation (34) ; et
- dans une troisième position (96), autorisant en outre un écoulement de réfrigérant à travers le radiateur principal (30),
**caractérisé en ce que** le dispositif de régulation (16), dans une position nulle (58) située avant la première position (72), bloque un écoulement de réfrigérant à travers le moteur thermique (10) et autorise l'écoulement de réfrigérant à travers l'échangeur de chaleur de chauffage (28).

2. Moteur à combustion interne selon la revendication 1, **caractérisé par** un dispositif de chauffage (122) pouvant être parcouru par le réfrigérant dans la position nulle (58) du dispositif de régulation (16).

3. Moteur à combustion interne selon la revendication 1 ou 2, **caractérisé en ce que** le dispositif de régulation (16), dans la première (72), la deuxième (88) et/ou la troisième (96) position, bloque une liaison directe entre la pompe à réfrigérant (32) et l'échangeur de chaleur de chauffage (28).

4. Moteur à combustion interne selon l'une quelconque des revendications précédentes, **caractérisé en ce que** le dispositif de régulation (16), dans la troisième position (96), bloque à nouveau un écoulement de réfrigérant à travers la dérivation (34) .

5. Moteur à combustion interne selon l'une quelconque des revendications précédentes, **caractérisé en ce que** le dispositif de régulation comprend un premier coulisseau de blocage (18) déplacé par l'actionneur (22) et un deuxième coulisseau de blocage (20) déplacé par le premier coulisseau de blocage (18), une position de fermeture du deuxième coulisseau de blocage (20) constituant la position nulle du dispositif de régulation.

6. Moteur à combustion interne selon la revendication 5, **caractérisé en ce que** le premier coulisseau de blocage (18), dans sa plage de mouvement, entraîne seulement en partie le deuxième coulisseau de blocage (20).

7. Moteur à combustion interne selon l'une quelconque des revendications 5 ou 6, **caractérisé en ce que** le ou les coulisseaux de blocage (18, 20) sont réalisés sous forme de tiroir rotatif.

8. Moteur à combustion interne selon l'une quelconque des revendications précédentes, **caractérisé par** un capteur de température de réfrigérant (70, 90) disposé dans un canal de réfrigérant (24, 26) du moteur à combustion interne (10).

9. Moteur à combustion interne selon l'une quelconque des revendications précédentes, **caractérisé en ce que** le dispositif de régulation (16) peut être réglé en fonction d'un champ caractéristique de fonctionnement du moteur à combustion interne entre la deuxième position (88) et la troisième position (96).

10. Moteur à combustion interne selon l'une quelconque des revendications précédentes, **caractérisé en ce qu'**un élément de refoulement de la pompe à réfrigérant (32) peut être entraîné au moyen d'un moteur électrique (108).

11. Moteur à combustion interne selon la revendication 10, **caractérisé en ce que** l'élément de refoulement peut être entraîné par le biais d'une transmission par le moteur électrique (108).

12. Moteur à combustion interne selon la revendication 10 ou 11, **caractérisé par** un circuit d'entraînement de pompe de refroidissement pour refroidir le moteur électrique (108) et/ou une électronique de puissance associée.

13. Véhicule automobile comprenant un moteur à combustion interne selon l'une quelconque des revendications précédentes prévu pour générer une puissance d'entraînement de conduite.

14. Véhicule automobile selon la revendication 13, **caractérisé par** un entraînement de conduite électrique supplémentaire.

15. Procédé pour faire fonctionner un véhicule automobile selon la revendication 14, **caractérisé en ce que** le dispositif de régulation (16), lorsque le moteur à combustion interne (10) ne fonctionne pas et que la puissance d'entraînement de conduite est générée par l'entraînement de conduite électrique, est maintenu dans la position nulle.
